# EUROPÄISCHE PATENTSCHRIFT

(11) **EP 3 814 149 B1**
(45) Veröffentlichungstag und Bekanntmachung des Hinweises auf die Patenterteilung: **19.02.2025**
(21) Anmeldenummer: 19732574.9
(22) Anmeldetag: 17.06.2019
(51) Int. Cl.: B44C 1/17, B44C 1/14

(54) **VERFAHREN UND VORRICHTUNG ZUR DRUCKVEREDELUNG**
METHOD AND DEVICE FOR PRINT ENHANCEMENT
PROCÉDÉ ET DISPOSITIF D'AMÉLIORATION DE PRODUITS IMPRIMÉS

(30) Priorität: 29.06.2018 DE 102018115748
(43) Veröffentlichungstag der Anmeldung: 05.05.2021
(73) Patentinhaber: ACTEGA Schmid Rhyner AG, 8134 Adliswil (CH)
(72) Erfinder: SCHLATTERBECK, Dirk, 9504 Friltschen (CH); RÜEDI, Roland, 8820 Wädenswil (CH); LUDWIG, Peter Eladio, 8050 Zürich (CH); WYLER, Dieter, 8302 Kloten (CH)
(74) Vertreter: Blumbach · Zinngrebe Patentanwälte PartG mbB
(86) Internationale Anmeldenummer: PCT/EP2019/065804
(87) Internationale Veröffentlichungsnummer: WO 2020/002010

(56) Entgegenhaltungen:
- DE-A1- 19 951 404
- DE-C1- 4 440 762
- US-A1- 2013 032 283

## Beschreibung

Die Erfindung betrifft allgemein das Gebiet der Herstellung von Druckerzeugnissen. Insbesondere betrifft die Erfindung die Druckveredelung von Druckerzeugnissen mit Folien.

Als Druckveredelung wird allgemein die Veränderung der Oberfläche von Druckerzeugnissen verstanden. Typischerweise hat eine solche Veredelung ästhetischen Charakter, um die Oberfläche haptisch und optisch zu verändern. Auch kann beispielsweise die Oberfläche gegen Abnutzung, Verblassen oder Aufnahme von Schmutz geschützt werden, um die Haltbarkeit des Druckerzeugnisses zu verbessern. Ein Beispiel für ein solches Verfahren ist die Einsiegelung, bei welchem das Druckerzeugnis vollflächig und beidseitig mit einer Kunststoffolie kaschiert wird. Auch die einseitige, vollflächige Laminierung mit Kunsstoffolien wird in der grafischen Industrie breit angewendet.

Ein Verfahren zur Druckveredelung ist ein lokaler Lackauftrag, um beschichtete Bereiche zu glätten, oder der Oberfläche mit der Lackschicht Glanz zu verleihen. Unter anderem wird für dieses Verfahren der Auftrag mit Siebdruck und Tintenstrahl-Druck verwendet. Für das Tintenstrahl-Druckverfahren sind UV-härtende Lacke besonders geeignet, da diese nach dem Auftrag schnell ausgehärtet werden können und zudem die Gefahr einer Verfestigung des Lacks in den Düsen des Druckkopfs vermieden wird.

Ein weiteres in der Druckveredelung eingesetztes Verfahren ist das Aufbringen von Folien auf das Druckerzeugnis. Besondere optische Effekte können dabei mit metallisierten Folien erzielt werden, unter anderem um gold- oder silberfarbene Schriftzüge und Dekorationen herzustellen. Hierbei wird gerne auch ein Prägeeffekt einbezogen, um die metallisierten Bereiche optisch und haptisch zusätzlich hervorzuheben. Ein gängiges Verfahren hierzu ist die Heißfolienprägung. Dabei wird eine Beschichtung auf der Unterseite der Trägerfolie mittels eines beheizten Metallstempels unter Druck mit der Unterlage verklebt. Gleichzeitig wird mit dem Metallstempel eine Prägung der Unterlage bewirkt. Die Trägerfolie wird nach der Prägung abgezogen und nur die Beschichtung verbleibt auf dem zu veredelnden Substrat. Zur Erzeugung einer metallisierten Veredelung ist mindestens eine Lage der Beschichtung auf der Trägerfolie eine Metallschicht, meist erzeugt durch die Bedampfung mit Aluminium.

Die US 2010/0212821 A1 offenbart ein Verfahren zur Herstellung eines Reliefs mit einer Folienkaschierung. Dabei wird ein härtbarer Klebstoff auf das Substrat aufgetragen und eine Folie aufgepresst, so dass diese mit dem Klebstoff in Kontakt kommt. Durch Einbringen von Energie während des Aufpressens wird der Klebstoff mit der Folie verklebt.

Wie bei dem vorgenannten Verfahren stellt die Folie im Allgemeinen die oberste Schicht dar, beziehungsweise bildet die Oberfläche des veredelten Druckerzeugnisses. Dies ist aus ästhetischen Gründen in vielen Fällen auch gewünscht. Andererseits wäre es auch wünschenswert, wenn folienkaschierte Oberflächen mit lackierten Oberflächenbereichen kombiniert werden könnten. Dieser Prozess ist jedoch häufig nur in zwei Schritten möglich, wenn z.B. die Station für den Klebstoffauftrag für die Folie auch für den Lackauftrag verwendet wird. Soll die Folie in einem zweiten Verfahrensschritt auf eine bereits lackierte Fläche geprägt werden, ist dies entweder durch einen prägbaren Lack lösbar, auf dem die Folie haftet. Oder der Lack muss in dem Bereich, der für die Folienprägung vorgesehen ist, ausgespart werden. Das Hauptproblem im letzteren Fall ist, dass bei Passerungenauigkeiten sich die Folie in den Randbereichen mit dem Lack überschneidet. In DE 199 51 404 A1 wird eine Kunststoffplatte bereichsweise mit einem strahlenhärtbaren Lack beschichtet, und sodann auf einer Temperatur gebracht, die höher ist als die Erweichungstemperatur des Kunststoffes aber niedriger als die Glasübergangstemperatur des Lackes ist, so dass nur die unbeschichteten Bereiche der Platte klebrig werden. Eine Folie, die auf die Platte aufgedrückt wird, bleibt nur an den klebrigen Bereichen und nicht auf die nichtklebrigen lackierten Bereichen haften. Die DE 44 40 762 C1 offenbart ein Verfahren bei dem folienkaschierte Oberflächenbereichen mit silikonisierten Oberflächenbereichen auf einer transparenten Kunststoffplatte kombiniert werden.

Der Erfindung liegt daher die Aufgabe zugrunde, ein Verfahren bereitzustellen, mit welchem eine Druckveredelung mit einer Kombination lackierter und folienkaschierter Bereiche ermöglicht wird, die die genannten Probleme vermeidet. Diese Aufgabe wird durch den Gegenstand der unabhängigen Ansprüche gelöst. Vorteilhafte Ausgestaltungen sind in den abhängigen Ansprüchen angegeben.

Demgemäß sieht die Erfindung ein Verfahren zur Veredelung von Druckerzeugnissen vor, bei welchem eine Unterlage aus Papier oder Karton auf einer Seite mit einem strahlenhärtenden Lack teilweise beschichtet wird, derart, dass auf der Seite zumindest ein beschichteter Bereich und zumindest ein unbeschichteter Bereich vorhanden ist, und wobei anschließend eine Folie auf der mit dem Lack beschichteten Seite aufgebracht und mit der Unterlage verklebt wird, wobei die Folie so ausgebildet ist, dass diese mit dem Material der Unterlage, aber nicht mit dem Lack verklebt, so dass die Verklebung der Folie selektiv im zumindest einen unbeschichteten Bereich erfolgt, und wobei die Folie nach Verklebung an der Trennlinie zwischen dem beschichteten und unbeschichteten Bereich aufgetrennt wird, so dass eine Unterlage erhalten wird, welche zumindest einen mit Lack beschichteten Bereich einer Seite und einen benachbarten, nicht mit diesem Lack beschichteten Bereich aufweist, wobei in diesem nicht mit dem Lack beschichteten Bereich eine Folie mit der Unterlage verklebt ist, deren Rand an den mit Lack beschichteten Bereich angrenzt.

Mit der Erfindung kann also eine in lackbeschichtete und folienkaschierte Bereiche untergliederte Oberfläche eines Druckerzeugnisses geschaffen werden, wobei sowohl der Lack, als auch die Folie direkt mit dem Material der Unterlage verbunden sind. Dies erlaubt auch neue ästhetische Gestaltungsmöglichkeiten, sowohl mit transparentem, als auch opakem Lack. Allgemein kann in Weiterbildung der Erfindung daher ein transparenter oder ein opaker Lack verwendet werden. Gemäß noch einer Weiterbildung der Erfindung können zumindest zwei verschiedene Lacke verwendet werden, die auf unterschiedliche Bereiche der Seite der Unterlage aufgetragen werden.

Die erfindungsgemäß verarbeitete Unterlage kann das Druckerzeugnis selbst repräsentieren. Es kann aber auch eine Weiterverarbeitung bis zum fertigen Druckerzeugnis erfolgen. Eine solche Weiterverarbeitung kann einen Zuschnitt, aber auch ein Bedrucken, insbesondere aber auch noch weitere Veredelungsschritte umfassen. Gemäß noch einer Ausführungsform der Erfindung dient die Unterlage als Zwischensubstrat und wird dazu verwendet, anhand der Musterung des Lacks die Folie auf dem Träger zu strukturieren, indem Bereiche der Folienbeschichtung auf das Zwischensubstrat übertragen werden. Die so strukturierte Folie wird dann in einem weiteren Schritt auf eine zweite Unterlage übertragen. Das Muster der übertragenen Folie entspricht dann dem Muster des Lacks auf dem Zwischensubstrat.

Demgemäß sieht die Erfindung auch ein Verfahren zur Veredelung von Druckerzeugnissen vor, bei welchem eine Unterlage aus Papier oder Karton auf einer Seite mit einem strahlenhärtenden Lack teilweise beschichtet wird, derart, dass auf der Seite zumindest ein beschichteter Bereich und zumindest ein unbeschichteter Bereich vorhanden ist, und wobei anschließend eine Folie auf der mit dem Lack beschichteten Seite aufgebracht und mit der Unterlage verklebt wird, wobei die Folie so ausgebildet ist, dass diese mit dem Material der Unterlage, aber nicht mit dem Lack verklebt, so dass die Verklebung der Folie selektiv im zumindest einen unbeschichteten Bereich erfolgt, und wobei die Folie nach Verklebung an der Trennlinie zwischen dem beschichteten und unbeschichteten Bereich aufgetrennt wird, so dass zwei komplementäre Teile der erhalten werden, wobei ein erster Teil mit der Unterlage verbunden ist, und wobei der zweite Teil nach dem Auftrennen mit einer zweiten, beziehungsweise weiteren Unterlage verbunden wird. Die erste Unterlage weist zumindest einen mit Lack beschichteten Bereich einer Seite und einen benachbarten, nicht mit diesem Lack beschichteten Bereich auf, wobei in diesem nicht mit dem Lack beschichteten Bereich die Folie mit der Unterlage verklebt ist, deren Rand an den mit Lack beschichteten Bereich angrenzt. Der zweite Teil der Folie muss nicht vollständig mit der zweiten Unterlage verklebt werden. Vielmehr kann auch die zweite Unterlage selektiv mit Lack beschichtete Bereich aufweisen, an denen die Folie nicht haftet, so dass ein weiterer Teil der Folie zurückbleibt und auf der zweiten Unterlage zumindest einen mit Lack beschichteten Bereich und einen benachbarten, nicht mit diesem Lack beschichteten Bereich aufweist, wobei in diesem nicht mit dem Lack beschichteten Bereich die Folie mit der Unterlage verklebt ist, deren Rand an den mit Lack beschichteten Bereich angrenzt. Kurz gesagt wird der nicht mit der ein Hilfssubstrat bildenden Unterlage verklebte Teil der Folie zumindest teilweise mit einer zweiten Unterlage verklebt, so dass die zweite Unterlage mit Folie versehene Bereiche aufweist, die zumindest teilweise komplementär zu den mit Folie versehenen Bereichen der ein Hilfssubstrat bildenden Unterlage sind.

Die Erfindung wird nachfolgend anhand der Figuren näher erläutert.

Es zeigen:
Fig. 1 eine Vorrichtung zur Verarbeitung von Unterlagen für Druckerzeugnisse,
Fig. 2 ein Beispiel eines Verbunds aus Trägerfolie 7 und Folie 6,
Fig. 3 ein Druckerzeugnis,
Fig. 4 Schritte bei der Herstellung eines Druckerzeugnisses mit Verwendung eines Hilfssubstrats.

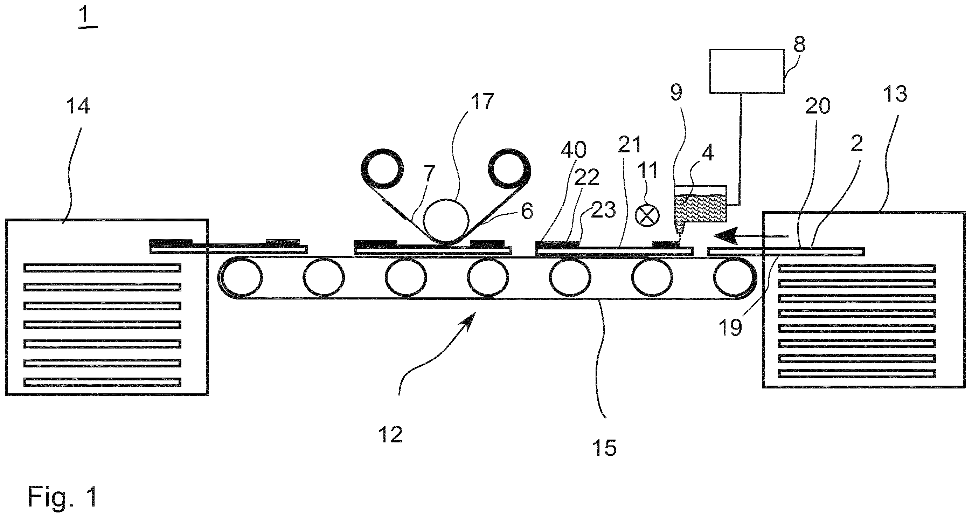

Fig. 1 zeigt eine Ausführungsform einer Vorrichtung zur Durchführung des erfindungsgemäßen Verfahrens. Entsprechend dem Verfahren umfasst die Vorrichtung zur Veredelung von Druckerzeugnissen
- eine Einrichtung zur teilweisen Beschichtung einer Seite 20 einer Unterlage 2 für ein Druckerzeugnis mit einem Lack 4, so dass auf der Seite 20 zumindest ein beschichteter Bereich 22 und zumindest ein unbeschichteter Bereich 21 vorhanden ist, eine
- Folie 6 zum Verkleben mit der Unterlage, sowie eine
- Einrichtung zum Aufbringen und Verkleben der Folie 6 mit der Unterlage 2 auf der mit dem Lack 4 beschichteten Seite 20,
- wobei die Folie 6 so ausgebildet ist, dass diese mit dem Material der Unterlage 2, aber nicht mit dem Lack 4 verklebt, so dass die Verklebung der Folie 4 selektiv im zumindest einen unbeschichteten Bereich 21 erfolgt, sowie
- eine Einrichtung, um die Folie 4 nach Verklebung an der Trennlinie, beziehungsweise Grenze 23 zwischen dem beschichteten und unbeschichteten Bereich 21, 22 aufzutrennen, so dass eine Unterlage 2 erhalten wird, welche zumindest einen mit Lack 4 beschichteten Bereich 22 einer Seite 20 und einen benachbarten, nicht mit diesem Lack 4 beschichteten Bereich 21 aufweist, wobei in diesem nicht mit dem Lack 4 beschichteten Bereich eine Folie 6 mit der Unterlage verklebt ist, deren Rand 60 an den mit Lack 4 beschichteten Bereich 22 angrenzt.

Die verwendeten Unterlagen 2 sind allgemein solche aus Papier oder Karton, wie sie üblicherweise für Druckerzeugnisse verwendet werden. Denkbar , jedoch nicht erfindungsgemäß, sind aber auch andere Materialien, wie etwa Etikettensubstrate, Kunststoff-Platten- oder Folien, Verbundmaterialien, Stoffe oder Vliese.

Typischerweise ist die Folie 6 sehr dünn und reißt leicht ein. Dies ist alleine deshalb bereits sinnvoll, um das Auftrennen an der Grenze des unbeschichteten Bereichs 21 zu erleichtern. Um die dünne Folie 6 handhaben zu können, ist allgemein, gemäß einer bevorzugten Ausführungsform der Erfindung vorgesehen, dass die Folie 6 auf einer Trägerfolie 7 aufgebracht ist, wobei zum Verkleben der Folie 6 die Trägerfolie mit der Seite, auf welcher die Folie 6 angeordnet ist, an die Unterlage 2 angepresst wird. Allgemein ist also in einer Ausführungsform vorgesehen, dass die Vorrichtung eine Einrichtung aufweist, um eine Trägerfolie 7, auf welcher die Folie 6 aufgebracht ist, an die Unterlage 2 anzupressen, um die Folie 6 von der Trägerfolie 7 auf die Unterlage 2 zu übertragen.

Bei dem Beispiel der Fig. 1 ist die Trägerfolie 7 mit der zu verklebenden Folie 6 zu einer Rolle aufgewickelt und wird abgewickelt während die Unterlagen 2 durch die Vorrichtung 1 geführt werden. Das Anpressen erfolgt mittels einer Andruckwalze 17, über welche die Trägerfolie 7 geführt wird. Durch die Führung der Trägerfolie 7 über die Andruckwalze 17 wird die Trägerfolie auch wieder von der Unterlage 2 abgehoben, nachdem die Folie 6 sich mit der Unterlage 2 verbunden hat. Dies führt dazu, dass die Folie 6 aufgetrennt wird, wobei nicht mit der Unterlage2 verklebte Bereiche auf der Trägerfolie 7 haften bleiben. Die Andruckwalze 17 dient mithin auch als Einrichtung, um die Folie 6 nach Verklebung an der Grenze 23 zwischen dem mit Lack 4 beschichteten und unbeschichteten Bereich 21, 22 aufzutrennen.

Allgemein kann wie auch bei dem dargestellten Beispiel eine Fördereinrichtung 12 vorgesehen sein, um die Unterlagen 2 an den Einrichtungen zur teilweisen Beschichtung mit einem Lack 4 und zum Aufbringen und Verkleben der Folie 6 mit der Unterlage 2 auf der mit dem Lack 4 beschichteten Seite 20 vorbeizubewegen.

Die Fördereinrichtung 12 umfasst gemäß einer Ausführungsform wie in Fig. 1 dargestellt ein Förderband 15. Die Unterlagen 2 in Form von Bögen aus Papier oder Karton werden mit einem Bogenanleger 13 auf das Transportband 15 aufgelegt und nach der Bearbeitung mit einem Bogenausleger 14 wieder abgenommen und gestapelt.

Anders als dargestellt ist auch eine Rolle-zu-Rolle-Verarbeitung denkbar, bei welcher nicht einzelne bogenförmige Unterlagen zugeführt werden, sondern eine aufgewickelte bahnförmige Unterlage 2 von einer Rolle abgewickelt, erfindungsgemäß durch Aufbringen von Lack 4 und Folie 6 verarbeitet und wieder aufgewickelt wird. Auch die Auftrennung in Bögen nach der Verarbeitung des bahnförmigen Substrats ist gemäß einer Ausführungsform möglich.

Das Herstellen einer Lackschicht 40 durch bereichsweises Aufbringen des Lacks 4 erfolgt gemäß einer bevorzugten Ausführungsform der Erfindung mittels eines Digitaldruckverfahrens. Insbesondere ist in Weiterbildung der Erfindung vorgesehen, dass die Einrichtung zur teilweisen Beschichtung einer Seite 20 der Unterlage 2 einen Ink-Jet-Druckkopf 9 umfasst, welcher den Lack 4 tröpfchenweise unter Ansprechen von Steuersignalen einer Steuereinrichtung 8 auf die Unterlage 2 abgibt. Die teilweise Beschichtung der Unterlage 2 mit einem Lack 4 durch Ausstoss von Tröpfchen des Lacks 4 aus dem Tintenstrahl-Druckkopf 9 unter Ansprechen von Steuersignalen der Steuereinrichtung 8 erfolgt insbesondere, während die Unterlage 2 relativ zum Tintenstrahl-Druckkopf 9 bewegt wird. Auf diese Weise werden die Tröpfen nebeneinander auf die Oberfläche gesetzt und können eine größere zusammenhängende Fläche der Unterlage 2 bedecken. Gegebenenfalls ist es nicht notwendig, dass die Tröpfchen eine geschlossene Schicht bilden, solange der Lack die Anhaftung der Folie 6 im beschichteten Bereich 22 verhindert.

Prinzipiell sind für den Zweck der Erfindung aber alle Verfahren möglich, die einen strukturierten Lackauftrag ermöglichen. Unter anderem sind Flexodruck, Tampondruck, Tiefdruck oder Siebdruck geeignet. Gemäß einer Ausführungsform der Erfindung erfolgt der Lackauftrag daher mit einem der vorgenannten Verfahren. Prinzipiell können auch verschiedene Druckverfahren miteinander kombiniert werden. So kann zunächst Lack mit Siebdruck aufgebracht und dann weitere Musterelemente mit einem anderen Druckverfahren, beispielsweise dem genannten Tintenstrahldruck ergänzt werden.

Die Einrichtung zur teilweise Beschichtung einer Seite 20 einer Unterlage 2 kann also alternativ oder zusätzlich zum Auftrag mittels des Tintenstrahl-Verfahren auch eine Einrichtung zum Auftrag des Lacks 4 mittels zumindest einem der Verfahren Tiefdruck, Flexodruck, Tampondruck oder Siebdruck umfassen. Es können auch verschiedene Druckverfahren miteinander kombiniert werden.

Gemäß der Erfindung wird als Lack 4 ein strahlenhärtender Lack verwendet und durch Einwirkung energierreicher Strahlung, vorzugsweise UV-Licht zu einer Lackschicht 40 verfestigt. Dazu ist im dargestellten Beispiel eine UV-Lichtquelle 11 vorgesehen, deren Licht auf die Unterlage 2 gerichtet ist.

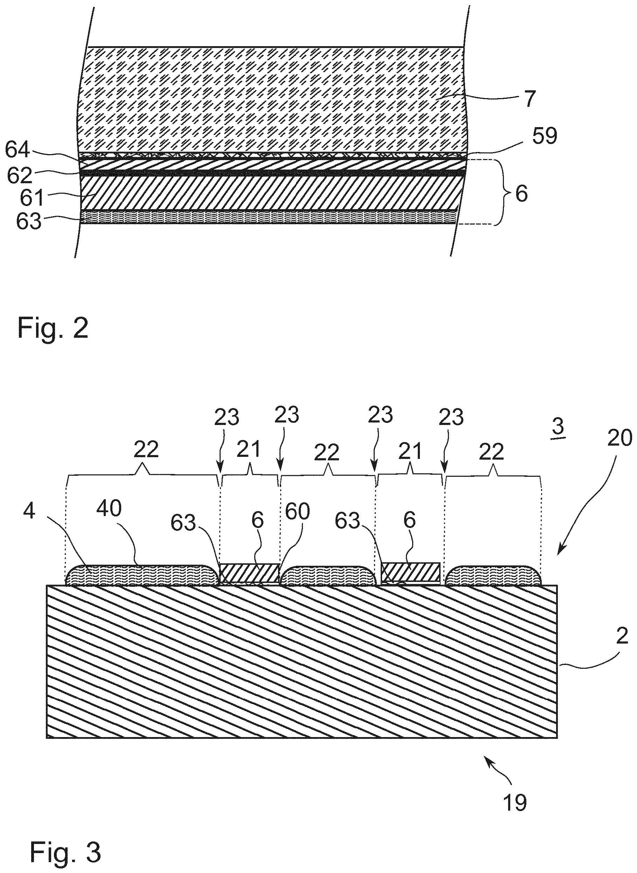

Fig. 2 zeigt ein Beispiel eines Verbunds aus Trägerfolie 7 und Folie 6. Die Folie 6 kann ihrerseits ein Verbund mit mehreren Schichten sein. Besonders bevorzugt ist allgemein eine Metallisierung 62 auf einer Folienschicht 61. Die Metallisierung 62 kann von einer Abdeckschicht 64 abgedeckt sein. Auf einer Seite der Folie 6 ist eine Klebstoffschicht 63 vorgesehen. Diese kann unter anderem als Heißsiegelschicht ausgebildet sein und verklebt die Folie 6 mit einer Unterlage unter Temperatur- und Druckeinwirkung.

Die Folie 6 ist an der Trägerfolie 7 mit einem Trennmittel 59 befestigt. Dies ermöglicht einerseits eine Fixierung an der Trägerfolie, andererseits auch eine Ablösung, wenn die Klebstoffschicht 63 mit der Unterlage verbunden ist. Ein geeignetes Trennmittel ist beispielsweise eine Wachsschicht.

In Fig. 3 ist im Querschnitt ein Druckerzeugnis 3 dargestellt, wie es mit der Erfindung erhältlich ist.

Das Druckerzeugnis 3, welches mit einem Verfahren oder einer Vorrichtung gemäß der Erfindung herstellbar ist, weist eine Lackschicht 40 auf einer Seite 20 der Unterlage 2 auf, wobei die Lackschicht 40 die Oberfläche der Seite 20 der Unterlage 2 bereichsweise bedeckt, so dass zumindest ein Bereich 22 mit der Lackschicht 40 beschichtet und zumindest ein angrenzender Bereich 21 der Seite 20 frei von der Lackschicht 40 ist, wobei die Lackschicht 40 erhaben ist, so dass die Oberfläche des benachbarten Bereichs 21 tiefer liegt, als die Oberfläche der Lackschicht 40, und wobei in diesem benachbarten Bereich 21 eine Folie 6 auf der Unterlage 2 aufgebracht und mit dieser verbunden ist, wobei der Rand 60 der Folie 6 an der Grenze 23 zwischen beschichtetem Bereich 22 und benachbartem unbeschichteten Bereich 21 liegt.

Die Oberfläche des Druckerzeugnisses ist also mit sich einander abwechselnden Bereichen, die entweder mit dem Lack 4 beschichtet oder mit der Folie 6 kaschiert sind, ausgestattet. Durch das Herstellungsverfahren wird dabei eine präzise Einpassung der Folie 6 in die Form der unbeschichteten Bereiche 21 erreicht. Mit diesem Druckerzeugnis lassen sich gegenüber beispielswseise dem Verfahren gemäß der US 2010/0212821 A1 neue Gestaltungsmöglichkeiten erreichen. So ist bei Verfahren, bei denen die Folie auf einer Lackschicht aufgebracht und mit der Lackschicht verbunden wird, die Folie selbst erhaben. Werden aber die Folie 6 und die Lackschicht nebeneinander und aneinandergrenzend aufgebracht, so kann eine Reliefstruktur auch ausgeglichen werden. So ist gemäß einer Weiterbildung der Erfindung vorgesehen, dass die Folie 6 den Höhenunterschied zwischen der Oberfläche der Lackschicht 40 und der Oberfläche der Unterlage 2 im unbeschichteten Bereich 21 zumindest verringert, gegebenenfalls auch völlig ausgleicht, so dass eine im Wesentlichen ebene Oberfläche geschaffen wird. Weist die Lackschicht gemäß einer weiteren Ausführungsform der Erfindung eine höhere Schichtdicke auf als die Dicke der Folie 6, kann auch ein Effekt erzeugt werden, der sonst nur mit einer Tiefprägung der Folie erzeugt werden kann. Wie bereits erwähnt, kann die Erfindung besonders auch für metallisierte Folien verwendet werden. In diesem Fall ergibt sich ein Erscheinungsbild, bei welchem metallisierte und lackierte Bereiche direkt aneinander grenzen.

Vorzugsweise liegt die Schichtdicke der Lackschicht 40 im Bereich von 1 bis 100 Mikrometer, besonders bevorzugt 2 bis 50 Mikrometer. Allgemein, besonders aber bei kleineren Schichtdicken kann die Folie 6 auch dicker als die Lackschicht 40 sein,, so dass die Oberfläche der Folie 6 höher liegt, als die Oberfläche der Lackschicht 40, beziehungsweise, so dass die Folienelemente erhabene Bereiche bilden.

Es ist dem Fachmann ersichtlich, dass die Erfindung nicht auf die Beispiele der Figuren beschränkt ist, sondern in vielfältiger Weise im Rahmen des Gegenstandes der nachfolgenden Ansprüche variiert werden kann. So können für die Erfindung auch zwei oder mehr verschiedene Lacke und/oder zwei oder mehr verschiedene Folien miteinander kombiniert werden, um die Gestaltungsmöglichkeiten der Druckveredelung zu erweitern.

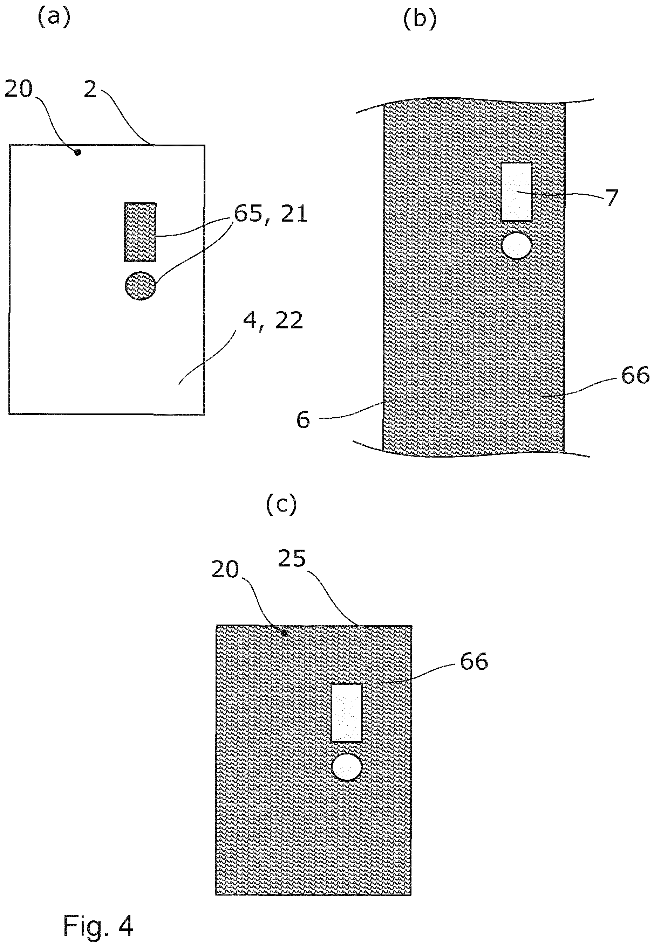

Anders als bei den oben erläuterten Ausführungsformen kann auch der nicht mit der Unterlage 2 verklebte Teil der Folie 6 für eine Druckveredelung genutzt werden. Bei dieser Ausführungsform wird das Lackmuster auf der Unterlage dazu genutzt, eine wie das Lackmuster geformte Folie auf eine weitere Unterlage aufzubringen. Die weitere Unterlage kann dann das eigentliche veredelte Druckerzeugnis bilden. Das Verfahren basiert wie auch bei anderen Ausführungsformen darauf, dass eine Unterlage 2 auf einer Seite 20 mit einem Lack 4 teilweise beschichtet wird, derart, dass auf der Seite 20 zumindest ein beschichteter Bereich 22 und zumindest ein unbeschichteter Bereich 21 vorhanden ist, und wobei anschließend die Folie 6 auf der mit dem Lack 4 beschichteten Seite aufgebracht und mit der Unterlage verklebt wird, wobei die Folie 6 so ausgebildet ist, dass diese mit dem Material der Unterlage, aber nicht mit dem Lack verklebt, so dass die Verklebung der Folie selektiv im zumindest einen unbeschichteten Bereich 21 erfolgt, und wobei die Folie nach Verklebung an der Trennlinie zwischen dem beschichteten und unbeschichteten Bereich aufgetrennt wird. Teilbild (a) der Fig. 4 zeigt die so mit der Folie 6 bereichsweise versehene Unterlage 2. Diese bildet ein Hilfssubstrat dahingehend, dass für die Veredelung nun der nicht mit der Unterlage 2 verklebte Teil 65, sondern der verbliebene, komplementäre Teil 66 der Folie 6 verwendet wird. Dieser zweite, komplementäre Teil 66 ist in Teilbild (b) dargestellt. Wie bereits beschrieben ist es günstig, die Folie 6 auf einer Trägerfolie 7 bereitzustellen. Nach dem Ablösen des Teils 65 verbleibt also der komplementäre Teil 66 der Folie 6, wie in Teilbild (b) gezeigt, auf der Trägerfolie 7.

Dieser Teil 66 der Folie 6 wird in einem zweiten Schritt dann zumindest teilweise mit einer weiteren Unterlage 25 verklebt, so dass die weitere Unterlage 25 mit Folie 6 versehene Bereiche 66 aufweist, die zumindest teilweise komplementär zu den mit Folie versehenen Bereichen 65 der das Hilfssubstrat bildenden Unterlage 2 sind. Diese komplementär gemusterte Unterlage 25 ist in Teilbild (c) gezeigt.

Gemäß einer Weiterbildung der Ausführungsform mit einem Hilfssubstrat ist vorgesehen, dass die Folie wie bereits beschrieben auf einer Trägerfolie aufgebracht ist, wobei zum Verkleben der Folie 6 die Trägerfolie 7 mit der Seite, auf welcher die Folie 6 angeordnet ist, an die Unterlage 2 angepresst wird. Wenn sich nun die Oberfläche der Folie mehrfach mit der gleichen Folie überprägen lässt, kann ein und dasselbe Hilfssubstrat mehrfach verwendet werden. Dann wird die noch unbenutzte Folie auf dem Hilfssubstrat in einem ersten Schritt von den im Hilfssubstrat unlackierten Bereichen von der Folie 6 befreit und in einem zweiten Schritt der verbleibende Rest der Folie 6 von der Trägerfolie 7 auf das zu veredelnde Substrat übertragen. So kann z.B. in einer dafür vorgesehenen Maschine das Hilfssubstrat in einer Station fest eingebaut werden und die Folie wird immer um die Formatlänge verfahren, am Hilfssubstrat vorstrukturiert, zur nächsten Station verfahren und dort das Zielsubstrat veredelt. Besonders für kleine Auflagen kann so billig ein Klischee zur Folienveredelung hergestellt und verwendet werden.

Gemäß einer zusätzlichen Weiterbildung wird wie im vorigen Beispiel die Folie 6 auf der Trägerfolie 7 durch Anpressen an die Unterlage 2 verklebt. Dabei bildet die Trägerfolie 7 auch die Unterlage, die wiederum hier das Hilfssubstrat ist. Die Folie 6 wird zu diesem Zwecke auf einen anderen Bereich der Trägerfolie übertragen. An diesem anderen Bereich ist zweckmäßig keine weitere Folie 6 vorhanden. Dieser andere Bereich kann beispielsweise die nicht mit der Folie 6 versehene Rückseite der Trägerfolie sein. Gemäß einer Alternative ist der andere Bereich ein Bereich, an welchem zuvor die Folie 6 durch Übertragung entfernt worden ist.

Das Verfahren gemäß diesen Ausführungsformen sieht also vor, dass die Folie von einer Trägerfolie auf die weiteren Unterlage 25 übertragen wird, wobei die Trägerfolie einen ersten Oberflächenabschnitt, der mit der Folie 6 versehen ist, sowie einen zweiten, nicht mit Folie 6 versehenen Oberflächenabschnitt aufweist, wobei der zweite Oberflächenabschnitt der Trägerfolie 7 teilweise mit dem Lack beschichtet wird, so dass auf diesem Oberflächenabschnitt zumindest ein beschichteter Bereich 22 und zumindest ein unbeschichteter Bereich 21 vorhanden ist, und wobei die Folie vom ersten Oberflächenabschnitt auf den zweiten Oberflächenabschnitt an dessen unbeschichteten Bereich 21 übertragen wird, so dass ein Teil der Folie auf dem ersten Oberflächenabschnitt verbleibt, und wobei dann die verbleibende Folie auf dem ersten Oberflächenabschnitt mit der weiteren Unterlage 25 verklebt wird.

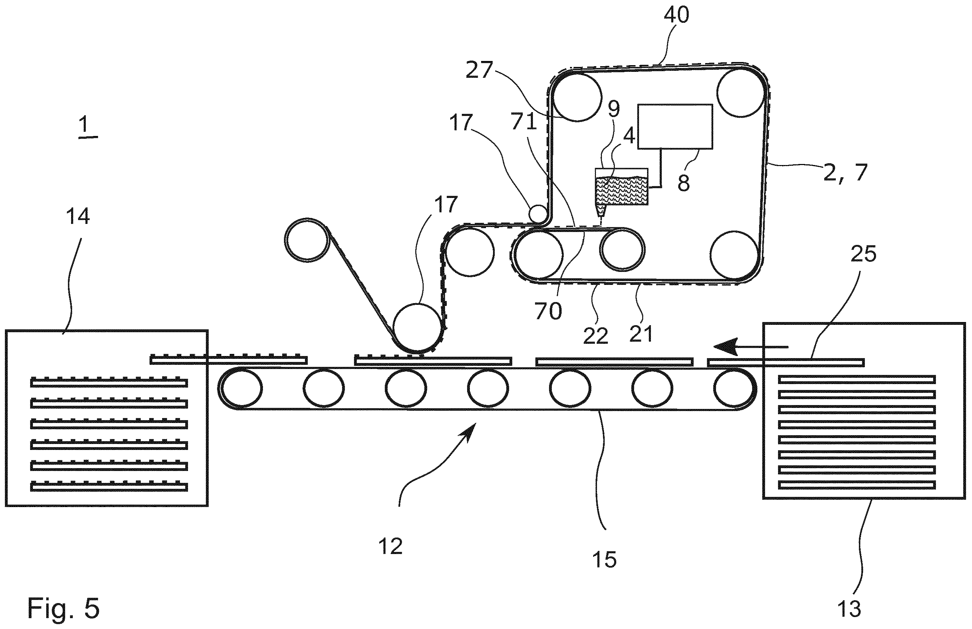

Fig. 5 zeigt dazu eine Vorrichtung, mit welcher Unterlagen 25 gemäß dieser Ausführungsform mit einer Folie 6 versehen werden können. Die Folie 6 ist wie bei der in Fig. 1 gezeigten Ausführungsform auf einer Trägerfolie 7 aufgebracht. Die Trägerfolie 7 stellt hier gleichzeitig die Unterlage 2 dar, die mit Lack 4 beschichtet wird, und zwar auf der nicht mit Folie 6 versehenen Seite der Trägerfolie 7. Die gegenüberliegenden Seiten der Trägerfolie 7 bilden damit einen ersten Oberflächenabschnitt 70 mit Folie 6 und einen zweiten Oberflächenabschnitt 71 ohne Folie. Das Beschichten mit Lack 4 geschieht wie bei der in Fig. 1 gezeigten Ausführungsform mit einem Tintenstrahl-Druckkopf 9. Die Trägerfolie 7 wird über mehrere Walzen 27 so geführt, dass die beiden Seiten, also die Oberflächenabschnitte 70, einander zugewandt sind. Mit einer Andruckwalze 17 werden die beiden Oberflächenabschnitte 70, 71 aufeinandergepresst und die Folie 6 auf den zweiten Oberflächenabschnitt 71 in den Bereichen, die nicht mit Lack 4, beziehungsweise der Lackschicht 40 versehen ist, übertragen. Die Trägerfolie 7 mit der auf den zweiten Oberflächenabschnitt 71 übertragenen Folie 6 wird dann mittels einer weiteren Andruckwalze auf die mit dem Förderband 15 transportierten weiteren Unterlagen 25 gepresst und übertragen. Wie bei der in Fig. 1 gezeigten Ausführungsform können die mit dem Förderband transportierten Unterlagen Druckerzeugnisse und/oder Bögen aus Papier oder Pappe sein. Mit dieser Ausführungsform wird ein Muster der Folie 6 auf der weiteren Unterlage 25 erzeugt, welches dem Muster des Lacks 4 auf der Unterlage 2, beziehungsweise hier speziell der Trägerfolie 7 entspricht. Die Vorrichtung 1 ist also allgemein, ohne Beschränkung auf das dargestellte Beispiel in dieser Ausführungsform dazu ausgebildet, die Trägerfolie 7 auf einem nicht mit Folie 6 versehenen zweiten Oberflächenabschnitt 71 mit einer Lackschicht 40 zu versehen und die Folie 6 von einem mit Folie 6 versehenen ersten Oberflächenabschnitt 70 auf den zweiten Oberflächenabschnitt 71 auf dessen nicht mit Lack 4 versehenen Bereiche zu übertragen. Dann kann die Vorrichtung 1 wie erläutert auch weiter dazu eingerichtet sein, diese übertragene Folie 6 auf eine weitere Unterlage 25, insbesondere ein Druckerzeugnis und/oder einen Bogen aus Papier oder Pappe zu übertragen.

Beide Ausführungsformen können auch miteinander kombiniert werden, indem die Folie 6 in zwei Schritten auf Unterlagen 2 übertragen wird. Dabei sind im ersten Schritt die Unterlagen 2 mit Lack versehen, so dass ein Teil der Folie 6 auf die nicht mit Lack beschichteten Bereiche übertragen wird. In einem zweiten Schritt wird ein weiterer Teil der Folie auf weitere Unterlagen übertragen. Wenn diese weiteren Unterlagen keine Lackschicht aufweisen, welche die Übertragung verhindern, ergibt sich auf diesen weiteren Unterlagen dann ein komplementäres Muster der Folie. Vorteilhaft ist ein solcher mehrfacher und insbesondere komplementärer Übertrag, da die auf der Trägerfolie 7 bereitgestellte Folie 6 vollständig oder zumindest zu einem großen Teil ausgenutzt werden kann.

Statt die Folie 6 im ersten Schritt auf sich selbst zu übertragen wie im vorangegangenen Beispiel ausgeführt, kann die Folie 6 im ersten Schritt auch partiell auf ein Hilfssubstrat und dann die verbleibenden Bereiche in einem zweiten Schritt, wie im Beispiel aufgezeigt, auf die Unterlage 25 übertragen werden.

**Bezugszeichenliste**

| | |
|---|---|
| 1 | Vorrichtung zur Verarbeitung von Unterlagen für Druckerzeugnisse |
| 2 | Unterlage |
| 3 | Druckerzeugnis |
| 4, 5 | Lack |
| 6 | Folie |
| 7 | Trägerfolie |
| 8 | Steuereinrichtung |
| 9 | Druckkopf |
| 11 | UV-Lichtquelle |
| 12 | Fördereinrichtung |
| 13 | Bogenanleger |
| 14 | Bogenausleger |
| 15 | Förderband |
| 17 | Andruckwalze |
| 19, 20 | Seiten von 2 |
| 21 | Unbeschichteter Bereich von 20 |
| 22 | Beschichteter Bereich von 20 |
| 23 | Grenze, Trennlinie zwischen 21, 22 |
| 25 | zweite Unterlage |
| 27 | Walze |
| 40 | Lackschicht, Beschichtung |
| 59 | Trennmittel |
| 60 | Rand von 6 |
| 61 | Folienschicht |
| 62 | Metallisierung |
| 63 | Klebstoffschicht |
| 64 | Abdeckschicht |
| 65, 66 | Komplementäre Teile von 6 |
| 70 | Erster Oberflächenabschnitt von 7 mit Folie 6 |
| 71 | zweiter Oberflächenabschnitt von 7 ohne Folie 6 |

## Patentansprüche

1. Verfahren zur Veredelung von Druckerzeugnissen, bei welchem eine Unterlage (2) auf einer Seite (20) mit einem strahlenhärtenden Lack (4) teilweise beschichtet wird, derart, dass auf der Seite (20) zumindest ein beschichteter Bereich (22) und zumindest ein unbeschichteter Bereich (21) vorhanden ist, und wobei anschließend eine Folie (6) auf der mit dem Lack (4) beschichteten Seite (20) aufgebracht und mit der Unterlage (2) verklebt wird, wobei die Folie (6) so ausgebildet ist, dass diese mit dem Material der Unterlage, aber nicht mit dem Lack (4) verklebt, so dass die Verklebung der Folie (4) selektiv im zumindest einen unbeschichteten Bereich (21) erfolgt, und wobei die Folie (4) nach Verklebung an der Trennlinie (23) zwischen dem beschichteten und unbeschichteten Bereich (21, 22) aufgetrennt wird, so dass eine Unterlage (2) erhalten wird, welche zumindest einen mit Lack (4) beschichteten Bereich (22) einer Seite (20) und einen benachbarten, nicht mit diesem Lack (4) beschichteten Bereich (21) aufweist, wobei in diesem nicht mit dem Lack (4) beschichteten Bereich eine Folie (6) mit der Unterlage verklebt ist, deren Rand (60) an den mit Lack (4) beschichteten Bereich (22) angrenzt und als Unterlage (2) ein Papier oder ein Karton verwendet wird.

2. Verfahren gemäß dem vorstehenden Anspruch, **dadurch gekennzeichnet, dass** die Folie (6) auf einer Trägerfolie (7) aufgebracht ist, wobei zum Verkleben der Folie (6) die Trägerfolie (7) mit der Seite, auf welcher die Folie (6) angeordnet ist, an die Unterlage (2) angepresst wird.

3. Verfahren gemäß einem der vorstehenden Ansprüche, **dadurch gekennzeichnet, dass** zumindest zwei verschiedene Lacke (4, 5) verwendet werden, die auf unterschiedliche Bereiche (22) der Seite (20) der Unterlage (2) aufgetragen werden.

4. Verfahren gemäß einem der vorstehenden Ansprüche, **dadurch gekennzeichnet, dass** die teilweise Beschichtung der Unterlage (2) mit einem Lack (4) durch Ausstoss von Tröpfchen des Lacks (4) aus einem Tintenstrahl-Druckkopf (9) unter Ansprechen von Steuersignalen einer Steuereinrichtung (8) erfolgt, während die Unterlage (2) relativ zum Tintenstrahl-Druckkopf (9) bewegt wird.

5. Verfahren gemäss einem der vorstehenden Ansprüche, **dadurch gekennzeichnet, dass** die Beschichtung der Unterlage (2) mit einem Lack mittels zumindest einem der Verfahren Flexodruck, Tampondruck, Tiefdruck oder Siebdruck erfolgt.

6. Verfahren gemäß einem der vorstehenden Ansprüche, bei welchem die Unterlage (2) ein Hilfssubstrat bildet und der nicht mit der Unterlage (2) verklebte Teil der Folie (6) zumindest teilweise mit einer weiteren Unterlage (25) verklebt wird, so dass die weitere Unterlage mit Folie versehene Bereiche (66) aufweist, die zumindest teilweise komplementär zu den mit Folie versehenen Bereichen (65) der ein Hilfssubstrat bildenden Unterlage (2) sind und wobei bevorzugt die Folie (6) von einer Trägerfolie (7) auf die weiteren Unterlage (25) übertragen wird, wobei die Trägerfolie (7) einen ersten Oberflächenabschnitt (70), der mit der Folie (6) versehen ist, sowie einen zweiten, nicht mit Folie (6) versehenen Oberflächenabschnitt (71) aufweist, wobei der zweite Oberflächenabschnitt (71) der Trägerfolie (7) teilweise mit dem Lack (4) beschichtet wird, so dass auf diesem Oberflächenabschnitt (71) zumindest ein beschichteter Bereich (22) und zumindest ein unbeschichteter Bereich (21) vorhanden ist, und wobei die Folie (6) vom ersten Oberflächenabschnitt (70) auf den zweiten Oberflächenabschnitt (71) an dessen unbeschichteten Bereich (21) übertragen wird, so dass ein Teil der Folie (6) auf dem ersten Oberflächenabschnitt (70) verbleibt, und wobei dann die verbleibende Folie auf dem ersten Oberflächenabschnitt mit der weiteren Unterlage (25) verklebt wird.

7. Vorrichtung zur Veredelung von Druckerzeugnissen, insbesondere zur Durchführung des Verfahrens gemäß einem der vorstehenden Ansprüche, umfassend
- eine Einrichtung zur teilweisen Beschichtung einer Seite (20) eines Papiers oder Kartons als Unterlage (2) für ein Druckerzeugnis mit einem strahlenhärtenden Lack (4), so dass auf der Seite (20) zumindest ein beschichteter Bereich (22) und zumindest ein unbeschichteter Bereich (21) vorhanden ist,
- eine UV-Lichtquelle zur Verfestigung des Lacks (4) zu einer Lackschicht, eine
- Folie (6) zum Verkleben mit der Unterlage, sowie eine
- Einrichtung zum Aufbringen und Verkleben der Folie (6) mit der Unterlage (2) auf der mit dem Lack (4) beschichteten Seite (20),
- wobei die Folie (6) so ausgebildet ist, dass diese mit dem Material der Unterlage (2), aber nicht mit dem Lack (4) verklebt, so dass die Verklebung der Folie (4) selektiv im zumindest einen unbeschichteten Bereich (21) erfolgt, sowie
- eine Einrichtung, um die Folie (6) nach Verklebung an der Grenze (23) zwischen dem beschichteten und unbeschichteten Bereich (21, 22) aufzutrennen, so dass eine Unterlage (2) eines Druckerzeugnisses erhalten wird, welche zumindest einen mit Lack (4) beschichteten Bereich (22) einer Seite (20) und einen benachbarten, nicht mit diesem Lack (4) beschichteten Bereich (21) aufweist, wobei in diesem nicht mit dem Lack (4) beschichteten Bereich eine Folie (6) mit der Unterlage verklebt ist, deren Rand (60) an den mit Lack (4) beschichteten Bereich (22) angrenzt.

8. Vorrichtung gemäß einem der vorstehenden Ansprüche, **dadurch gekennzeichnet, dass** die Einrichtung zur teilweisen Beschichtung einer Seite (20) einer Unterlage (2) einen Ink-Jet-Druckkopf (9) umfasst, welcher den Lack (4) tröpfchenweise unter Ansprechen von Steuersignalen einer Steuereinrichtung (8) auf die Unterlage (2) abgibt .

9. Vorrichtung gemäß einem der vorstehenden Ansprüche, **dadurch gekennzeichnet, dass** die Vorrichtung eine Einrichtung aufweist, um eine Trägerfolie (7), auf welcher die Folie (6) aufgebracht ist, an die Unterlage (2) anzupressen, um die Folie (6) von der Trägerfolie (7) auf die Unterlage (2) zu übertragen.

10. Vorrichtung gemäß dem vorstehenden Anspruch, eingerichtet, um die Trägerfolie (7) auf einem nicht mit Folie (6) versehenen zweiten Oberflächenabschnitt (71) mit einer Lackschicht (40) zu versehen und die Folie (6) von einem mit Folie 6 versehenen ersten Oberflächenabschnitt (70) auf den zweiten Oberflächenabschnitt (71) auf dessen nicht mit Lack (4) versehenen Bereiche zu übertragen.

11. Druckerzeugnis (3), herstellbar mit einem Verfahren oder einer Vorrichtung gemäß einem der vorstehenden Ansprüche, mit einer durch Strahlung gehärteten Lackschicht (40) auf einer Seite (20) einer Unterlage (2), wobei die Lackschicht (40) die Oberfläche der Seite (20) der Unterlage (2) bereichsweise bedeckt, so dass zumindest ein Bereich (22) mit der Lackschicht (40) beschichtet und zumindest ein angrenzender Bereich (21) der Seite (20) frei von der Lackschicht (40) ist, wobei die Lackschicht (40) erhaben ist, so dass die Oberfläche des benachbarten Bereichs (21) tiefer liegt, als die Oberfläche der Lackschicht (40), wobei in diesem benachbarten Bereich (21) eine Folie (6) auf der Unterlage (2) aufgebracht und mit dieser verbunden ist, wobei der Rand (60) der Folie (6) an der Grenze (23) zwischen beschichtetem Bereich (22) und benachbartem unbeschichteten Bereich (21) liegt und wobei die Unterlage (2) ein Papier oder ein Karton ist.

12. Druckerzeugnis (3) gemäß dem vorstehenden Anspruch, **dadurch gekennzeichnet, dass** die Folie (6) den Höhenunterschied zwischen der Oberfläche der Lackschicht (40) und der Oberfläche der Unterlage (2) im unbeschichteten Bereich (21) zumindest verringert.

13. Druckerzeugnis (3) gemäß einem der beiden vorstehenden Ansprüche, **dadurch gekennzeichnet, dass** die Folie (6) dicker als die Lackschicht (40) ist, so dass die Oberfläche der Folie (6) höher liegt, als die Oberfläche der Lackschicht (40).

14. Druckerzeugnis (3) gemäß einem der beiden vorstehenden Ansprüche, **dadurch gekennzeichnet, dass** die Folie (6) metallisiert ist.

15. Druckerzeugnis (3) gemäß einem der beiden vorstehenden Ansprüche, **dadurch gekennzeichnet, dass** die Schichtdicke der Lackschicht (40) im Bereich von 1 bis 100 Mikrometern liegt.

## Claims

1. A method for enhancement of printed products, wherein a substrate (2) is partially coated on one side (20) with a radiation-curing lacquer (4) in such a way that at least one coated area (22) and at least one uncoated area (21) are provided on the side (20), and wherein a foil (6) is subsequently applied to the side (20) coated with the lacquer (4) and bonded to the substrate (2), wherein the foil (6) is adapted so as to bond to the material of the substrate but not to the lacquer (4), so that the bonding of the foil (4) occurs selectively in the at least one uncoated area (21), and wherein, after bonding, the foil (4) is severed along the dividing line (23) between the coated and uncoated areas (21, 22), so that a substrate (2) is obtained which has at least one area (22) of one side (20) coated with lacquer (4) and an adjacent area (21) not coated with this lacquer (4), wherein in this area not coated with the lacquer (4) a foil (6) is bonded to the substrate, the edge (60) of which adjoins the area (22) coated with lacquer (4), and wherein a paper or a cardboard is used as the substrate (2).

2. The method according to the preceding claim, **characterised in that** the foil (6) is applied on a carrier foil (7), wherein for the bonding of the foil (6) the carrier foil (7) is pressed onto the substrate (2) with the side on which the foil (6) is provided.

3. The method according to any one of the preceding claims, **characterised in that** at least two different lacquers (4, 5) are used, which are applied to different areas (22) of the side (20) of the substrate (2).

4. The method according to any one of the preceding claims, **characterised in that** the partial coating of the substrate (2) with a lacquer (4) is accomplished by ejection of droplets of the lacquer (4) from an inkjet print head (9) in response to control signals from a control device (8), while the substrate (2) is moved relative to the inkjet print head (9).

5. The method according to any one of the preceding claims, **characterised in that** the coating of the substrate (2) with a lacquer is performed by at least one of the processes selected from flexographic printing, pad printing, gravure printing or screen printing.

6. The method according to any one of the preceding claims, wherein the substrate (2) defines an auxiliary substrate and the part of the foil (6) not bonded to the substrate (2) is at least partially bonded to a further substrate (25), so that the further substrate has foil-covered areas (66) which are at least partially complementary to the foil-covered areas (65) of the substrate (2) that defines an auxiliary substrate, and wherein preferably the foil (6) is transferred from a carrier foil (7) to the further substrate (25), wherein the carrier foil (7) has a first surface portion (70) which is provided with the foil (6) and a second surface portion (71) which is not provided with the foil (6), wherein the second surface portion (71) of the carrier foil (7) is partially coated with the lacquer (4), so that at least one coated area (22) and at least one uncoated area (21) is provided on this surface portion (71), and wherein the foil (6) is transferred from the first surface portion (70) to the second surface portion (71) to the uncoated area (21) thereof, so that part of the foil (6) remains on the first surface portion (70), and wherein subsequently the foil remaining on the first surface portion is bonded to the further substrate (25).

7. A device for enhancement of printed products, in particular for carrying out the method according to any one of the preceding claims, comprising
- means for partially coating one side (20) of a paper or cardboard as a substrate (2) for a printed product with a radiation-curing lacquer (4), so that at least one coated area (22) and at least one uncoated area (21) is provided on said side (20);
- a UV light source for solidifying the lacquer (4) to form a lacquer layer;
- a foil (6) for bonding to the substrate; and
- means for applying and bonding the foil (6) to the substrate (2) on the side (20) coated with the lacquer (4);
- wherein the foil (6) is adapted such that it bonds to the material of the substrate (2) but not to the lacquer (4), so that the bonding of the foil (4) occurs selectively in the at least one uncoated area (21); and
- means for severing the foil (6) along the boundary (23) between the coated and uncoated areas (21, 22) subsequently to the bonding, so that a substrate (2) for a printed product is obtained which has at least one area (22) of one side (20) coated with lacquer (4) and an adjacent area (21) not coated with this lacquer (4), wherein in this area not coated with the lacquer (4) a foil (6) is bonded to the substrate, the edge (60) of which adjoins the area (22) coated with lacquer (4).

8. The device according to any one of the preceding claims, **characterised in that** the means for partially coating one side (20) of a substrate (2) comprise an ink-jet print head (9) which dispenses the lacquer (4) drop by drop onto the substrate (2) in response to control signals from a control device (8).

9. The device according to any one of the preceding claims, **characterised in that** the device comprises means for pressing a carrier foil (7) on which the foil (6) is applied, against the substrate (2) in order to transfer the foil (6) from the carrier foil (7) to the substrate (2).

10. The device according to the preceding claim, adapted to provide the carrier foil (7) with a lacquer layer (40) on a second surface portion (71) that is not provided with foil (6), and to transfer the foil (6) from a first surface portion (70) provided with foil (6) to the second surface portion (71) to the areas thereof which are not provided with lacquer (4).

11. A printed product (3) that can be produced using a method or a device according to any one of the preceding claims, comprising a radiation-cured lacquer layer (40) on one side (20) of a substrate (2), wherein the lacquer layer (40) covers the surface of the side (20) of the substrate (2) in areas thereof, so that at least one area (22) is coated with the lacquer layer (40) and at least one adjacent area (21) of the side (20) is free of the lacquer layer (40), wherein the lacquer layer (40) is raised so that the surface of the adjacent area (21) is at a lower level than the surface of the lacquer layer (40), wherein a foil (6) is applied to the substrate (2) in this adjacent area (21) and bonded thereto, wherein the edge (60) of the foil (6) adjoins the boundary (23) between the coated area (22) and the adjacent uncoated area (21), and wherein the substrate (2) is a paper or a cardboard.

12. The printed product (3) according to the preceding claim, **characterised in that** the foil (6) at least decreases the difference in the level between the surface of the lacquer layer (40) and the surface of the substrate (2) in the uncoated area (21).

13. The printed product (3) according to any one of the two preceding claims, **characterised in that** the foil (6) is thicker than the lacquer layer (40), so that the surface of the foil (6) is at a higher level than the surface of the lacquer layer (40).

14. The printed product (3) according to any one of the two preceding claims, **characterised in that** the foil (6) is metallised.

15. The printed product (3) according to any one of the two preceding claims, **characterised in that** the layer thickness of the lacquer layer (40) is in the range from 1 to 100 micrometres.

## Revendications

1. Procédé pour l'amélioration de produits imprimés, selon lequel un support (2) est revêtu partiellement sur une face (20) d'un vernis (4) durcissant par rayonnement, de telle sorte qu'au moins une zone (22) revêtue et au moins une zone (21) non revêtue est présente sur la face (20), et dans lequel un film (6) est ensuite appliqué sur la face (20) revêtue du vernis (4) et collé au support (2), dans lequel le film (6) est réalisé de sorte que celui-ci colle au matériau du support, mais pas au vernis (4), de sorte que le collage du film (4) s'effectue sélectivement dans l'au moins une zone (21) non revêtue, et dans lequel le film (4) après collage est séparé sur la ligne de séparation (23) entre la zone revêtue et non revêtue (21, 22), de sorte qu'un support (2) est obtenu, lequel présente au moins une zone (22) revêtue de vernis (4) d'une face (20) et une zone (21) voisine, non revêtue de ce vernis (4), dans lequel dans cette zone non revêtue du vernis (4) un film (6) est collé au support, dont le bord (60) est adjacent à la zone (22) revêtue de vernis (4) et un papier ou un carton est utilisé comme support (2).

2. Procédé selon la revendication précédente, **caractérisé en ce que** le film (6) est appliqué sur un film de support (7), dans lequel pour coller le film (6) le film de support (7) est pressé sur le support (2) avec la face sur laquelle le film (6) est disposé.

3. Procédé selon l'une quelconque des revendications précédentes, **caractérisé en ce qu'**au moins deux vernis (4, 5) différents sont utilisés, qui sont appliqués sur des zones (22) différentes de la face (20) du support (2).

4. Procédé selon l'une quelconque des revendications précédentes, **caractérisé en ce que** le revêtement partiel du support (2) d'un vernis (4) s'effectue par éjection de gouttelettes du vernis (4) à partir d'une tête d'impression à jet d'encre (9) en réponse à des signaux de commande d'un système de commande (8), pendant que le support (2) est déplacé par rapport à la tête d'impression à jet d'encre (9).

5. Procédé selon l'une quelconque des revendications précédentes, **caractérisé en ce que** le revêtement du support (2) s'effectue avec un vernis au moyen d'au moins un des procédés flexographie, tampographie, impression en creux ou sérigraphie.

6. Procédé selon l'une quelconque des revendications précédentes, selon lequel le support (2) forme un substrat auxiliaire et la partie du film (6) non collée au support (2) est collée au moins partiellement à un autre support (25), de sorte que l'autre support présente des zones (66) pourvues d'un film, qui sont au moins partiellement complémentaires des zones (65) pourvues d'un film du support (2) formant un substrat auxiliaire et dans lequel de préférence le film (6) est transféré à partir d'un film de support (7) sur l'autre support (25), dans lequel le film de support (7) présente une première section de surface (70), qui est pourvue du film (6), ainsi qu'une deuxième section de surface (71), non pourvue du film (6), dans lequel la deuxième section de surface (71) du film de support (7) est revêtue partiellement du vernis (4), de sorte qu'au moins une zone (22) revêtue et au moins une zone (21) non revêtue est présente sur cette section de surface (71), et dans lequel le film (6) est transféré à partir de la première section de surface (70) sur la deuxième section de surface (71) sur la zone (21) non revêtue de celui-ci, de sorte qu'une partie du film (6) reste sur la première section de surface (70), et dans lequel le film restant est ensuite collé sur la première section de surface avec l'autre support (25) .

7. Dispositif pour l'amélioration de produits imprimés, en particulier pour la mise en œuvre du procédé selon l'une quelconque des revendications précédentes, comprenant
- un système pour revêtir partiellement une face (20) d'un papier ou carton comme support (2) pour un produit imprimé avec un vernis (4) durcissant par rayonnement, de sorte qu'au moins une zone (22) revêtue et au moins une zone (21) non revêtue est présente sur la face (20),
- une source de lumière ultraviolette pour solidifier le vernis (4) en une couche de vernis, un
- film (6) à coller au support, ainsi qu'un
- système pour appliquer et coller le film (6) au support (2) sur la face (20) revêtue du vernis (4),
- dans lequel le film (6) est réalisé de sorte que celui-ci colle au matériau du support (2), mais pas au vernis (4), de sorte que le collage du film (4) s'effectue sélectivement dans l'au moins une zone (21) non revêtue, ainsi que
- un système, afin de séparer le film (6) après collage sur la limite (23) entre la zone revêtue et non revêtue (21, 22), de sorte qu'un support (2) d'un produit imprimé est obtenu, lequel présente au moins une zone (22) revêtue de vernis (4) d'une face (20) et une zone (21) voisine, non revêtue de ce vernis (4), dans lequel dans cette zone non revêtue du vernis (4) un film (6) est collé au support, dont le bord (60) est adjacent à la zone (22) revêtue de vernis (4).

8. Dispositif selon l'une quelconque des revendications précédentes, **caractérisé en ce**
**que** le système pour revêtir partiellement une face (20) d'un support (2) comprend une tête d'impression à jet d'encre (9), laquelle délivre le vernis (4) par gouttes sur le support (2)en réponse à des signaux de commande d'un système de commande (8).

9. Dispositif selon l'une quelconque des revendications précédentes, **caractérisé en ce**
**que** le dispositif présente un système, afin de presser un film de support (7), sur lequel le film (6) est appliqué, sur le support (2), afin de transférer le film (6) à partir du film de support (7) sur le support (2).

10. Dispositif selon la revendication précédente, conçu pour pourvoir le film de support (7) sur une deuxième section de surface (71) non pourvue du film (6) d'une couche de vernis (40) et pour transférer le film (6) à partir d'une première section de surface (70) pourvue du film (6) sur la deuxième section de surface (71) sur les zones de celle-ci non pourvues de vernis (4).

11. Produit imprimé (3), pouvant être fabriqué avec un procédé ou un dispositif selon l'une quelconque des revendications précédentes, avec une couche de vernis (40) durcie par rayonnement sur une face (20) d'un support (2), dans lequel la couche de vernis (40) recouvre par endroits la surface de la face (20) du support (2), de sorte qu'au moins une zone (22) est revêtue de la couche de vernis (40) et au moins une zone (21) adjacente de la face (20) est exempte de la couche de vernis (40), dans lequel la couche de vernis (40) est saillante, de sorte que la surface de la zone (21) voisine se situe plus bas que la surface de la couche de vernis (40), dans lequel dans cette zone (21) voisine un film (6) est appliqué sur le support (2) et est relié à celui-ci, dans lequel le bord (60) du film (6) se situe à la limite (23) entre la zone (22) revêtue et la zone (21) non revêtue voisine et dans lequel le support (2) est un papier ou un carton.

12. Produit imprimé (3) selon la revendication précédente, **caractérisé en ce que** le film (6) au moins diminue la différence de hauteur entre la surface de la couche de vernis (40) et la surface du support (2) dans la zone (21) non revêtue.

13. Produit imprimé (3) selon l'une des deux revendications précédentes, **caractérisé en ce que** le film (6) est plus épais que la couche de vernis (40), de sorte que la surface du film (6) se situe plus haut que la surface de la couche de vernis (40).

14. Produit imprimé (3) selon l'une des deux revendications précédentes, **caractérisé en ce que** le film (6) est métallisé.

15. Produit imprimé (3) selon l'une des deux revendications précédentes, **caractérisé en ce que** l'épaisseur de couche de la couche de vernis (40) se situe dans la plage de 1 à 100 micromètres.
